# EUROPÄISCHE PATENTSCHRIFT

(11) **EP 2 774 815 B1**
(45) Veröffentlichungstag und Bekanntmachung des Hinweises auf die Patenterteilung: **25.07.2018**
(21) Anmeldenummer: 14157460.8
(22) Anmeldetag: 03.03.2014
(51) Int. Cl.: B60R 11/04, H04N 5/225, B60R 1/00

(54) **Fahrzeug mit einem Sichtsystem**
Vehicle equipped with a viewing system
Véhicule équipé avec un système de visualisation

(30) Priorität: 04.03.2013 DE 102013203642
(43) Veröffentlichungstag der Anmeldung: 10.09.2014
(73) Patentinhaber: MEKRA Lang GmbH & Co. KG, 91465 Ergersheim (DE)
(72) Erfinder: Lang, Werner Dr., 91465 Ergersheim (DE); Zink, Matthias, 91620 Ohrenbach (DE)
(74) Vertreter: Winter, Brandl, Fürniss, Hübner, Röss, Kaiser, Polte - Partnerschaft mbB

(56) Entgegenhaltungen:
- WO-A1-2006/104317
- DE-A1-102007 052 617
- DE-A1-102011 010 624
- DE-T2- 60 214 047
- JP-A- 2004 082 778
- JP-A- 2006 298 318
- JP-A- 2010 012 865

## Beschreibung

Die Erfindung betrifft ein Fahrzeug mit einem Sichtsystem nach Anspruch 1. Es ist bekannt, dass zur Überwachung eines äußeren Fahrzeugumfelds Sichtsysteme eingesetzt werden, um das äußere Fahrzeugumfeld innerhalb des Fahrzeuginnenraums zu visualisieren. Hierfür sind so genannte Einrichtungen für eine indirekte Sicht bekannt, bei denen es sich beispielsweise um Spiegel handelt, die innerhalb oder außerhalb des Fahrzeugs angeordnet sind, um einen Fahrer des Fahrzeugs das äußere Fahrzeugumfeld im Fahrzeuginnenraum abzubilden. In Abhängigkeit des Fahrzeugtyps und auch davon, welche Bereiche des Fahrzeugumfelds vom Fahrer direkt eingesehen werden können, verlangen unterschiedliche gesetzliche Vorschriften danach, dass bestimmte Sichtfelder rund um das Fahrzeug mittels der Einrichtungen für Indirekte Sicht jederzeit im Fahrzeuginnenraum abgebildet werden können. Aus der DE102007052617 A ist ein Fahrzeug nach dem Oberbegriff des Anspruches 1 bekannt. Aus der DE 10 2011 010 624 A1 ist eine andere Art von Sichtsystem bekannt, mittels dem gesetzlich vorgeschriebene Sichtfelder eines Fahrzeugs mittels einer Widergabeeinrichtung, wie beispielsweise eines Bildschirms bzw. eines Displays oder einer Projektion, wiedergegeben werden können. Hierfür weist das Sichtsystem wenigstens eine Aufnahme- bzw. Erfassungseinrichtung auf, die das Fahrzeugumfeld aufnimmt und an die im Fahrzeuginnenraum angeordnete Wiedergabeeinrichtung überträgt. Diese Erfassungseinrichtung kann beispielsweise als Kamera ausgeführt und am Tragarm eines Außenrückspiegels angebracht sein. Nachteilig daran ist, dass die in sich vom Fahrzeug weg erstreckenden Haltearm angeordnete Kamera bei einer Kollision des Haltearms mit einem anderen Objekt beschädigt werden kann. Zudem ist die relativ empfindliche Kameraelektronik Temperatureinflüssen im Außenbereich ausgesetzt, so dass die Kameraelektronik relativ aufwendig vor diesen Temperatureinflüssen geschützt werden muss. Ebenso nachteilig ist, dass der Haltearm ausreichend groß ausgebildet sein muss, um die Kamera schützend aufnehmen zu können. Des Weiteren muss die Kamera relativ aufwendig vor Diebstählen und äußeren Umwelteinflüssen, wie beispielsweise Temperatureinflüssen oder Feuchtigkeit, geschützt werden.

Demgegenüber liegt der Erfindung die Aufgabe zugrunde, ein Sichtsystem zum Visualisieren eines äußeren Fahrzeugumfelds innerhalb eines Fahrzeuginnenraums zu schaffen, bei dem mit konstruktiv möglichst einfachen Mitteln eine zuverlässige Visualisierung gewährleistet wird.

Diese Aufgabe wird gelöst durch ein Fahrzeug nach Anspruch 1. Vorteilhafte Weiterbildungen der Erfindung sind in den Unteransprüchen angegeben.

Das erfindungsgemäße Sichtsystem zum Visualisieren eines äußeren Fahrzeugumfelds eines Fahrzeugs, insbesondere eines Lastkraftwagens, innerhalb eines Fahrzeuginnenraums umfasst wenigstens eine das äußere Fahrzeugumfeld optisch erfassende Erfassungseinrichtung sowie wenigstens eine innerhalb des Fahrzeuginnenraums angeordnete und das erfasste Fahrzeugumfeld wiedergebende Wiedergabeeinrichtung. Erfindungsgemäß weist die Erfassungseinrichtung eine Lichtumlenkeinrichtung zum wenigstens teilweisen optischen Erfassen des äußeren Fahrzeugumfelds und eine von der Lichtumlenkeinrichtung beabstandet angeordnete Aufnahmeeinheit auf. Erfindungsgemäß ist ferner die Aufnahmeeinheit in einem ersten Teil eines Tragarms angeordnet, der sich nach außen erstreckt, und ist die Lichtumlenkeinrichtung in einem zweiten Teil des Tragarms angeordnet. Ferner sind erfindungsgemäß das erste Teil und das zweite Teil direkt oder indirekt miteinander verbunden. Mittels der Aufnahmeeinheit ist ein das erfasste Sichtfeld wiedergebende, das heißt, reflektierende Bild der Lichtumlenkeinrichtung aufnehmbar und mittels der innerhalb des Fahrzeuginnenraums angeordneten Wiedergabeeinrichtung wiedergebbar.

Bei der Lichtumlenkeinrichtung kann es sich um eine lichtreflektierende Fläche, in einfachsten Fall um eine spiegelnde Fläche, das heißt einen Spiegel, handeln. Die Lichtumlenkeinrichtung kann ein oder mehrere Lichtumlenkelemente, beispielsweise in Form von einzelnen Spiegeln, umfassen. Die Aufnahmeeinheit kann beispielsweise in Form einer Kamera das von der Lichtumlenkeinrichtung reflektiertes Bild optisch erfassen beziehungsweise aufnehmen. Optional kann die Aufnahmeeinheit in einem diese vor Umwelteinflüssen schützenden Kameragehäuse angeordnet sein.

Das erfindungsgemäße Sichtsystem bietet den Vorteil, dass die räumliche Trennung der Lichtumlenkeinrichtung von der hiervon beabstandet angeordneten Aufnahmeeinheit die Möglichkeit bietet, die Aufnahmeeinheit in dem Fahrzeuginnenraum anzuordnen , der ein klimatisierter Trockenbereich ist. Beispielsweise ist es dabei möglich, eine Kamera als Aufnahmeeinheit einzusetzen, ohne dass deren Kameraelektronik im Außenbereich, insbesondere in einem Haltearm eines Außenspiegels, angeordnet ist. Im Vergleich zu der relativ teuren Aufnahmeeinheit ist erfindungsgemäß nur eine relativ günstige Lichtumlenkeinrichtung, bei der es sich beispielsweise um einen Spiegel handeln kann, in dem vergleichsweise wenig geschützten Außenbereich angeordnet. Eine solche Lichtumlenkeinrichtung kann auf herkömmliche Weise in einem sich vom Fahrzeug weg erstreckenden Tragarm beziehungsweise Kameraarm angeordnet werden, der Dank der vorliegenden Erfindung relativ einfach, kostengünstig und relativ klein und leichtbauend ausgeführt sein kann. Mit dem erfindungsgemäßen Sichtsystem ist es zudem möglich, die Aufnahmeeinheit so im Fahrzeug anzuordnen, dass die Aufnahmeeinheit vor Temperatureinflüssen im Außenbereich des Fahrzeugs geschützt ist. Zudem ermöglicht es die räumliche Trennung der Lichtumlenkeinrichtung von der hiervon beabstandet angeordneten Aufnahmeeinheit, dass der Tragarm nur das relativ geringe Gewicht der Lichtumlenkeinrichtung tragen muss.

Zum Aufnehmen des Bildes der Lichtumlenkeinrichtung mittels der Aufnahmeeinheit ist es lediglich notwendig, dass die Aufnahmeeinheit so räumlich angeordnet und/oder ausgerichtet ist, dass eine optische Erfassung der Bildreflexion mittels der Aufnahmeeinheit möglich ist. Das heißt, es ist lediglich ein optischer Pfad zwischen der Aufnahmeeinheit und der Lichtumlenkeinrichtung sicherzustellen, wobei dies durch eine einfache Aussparung, das heißt durch das Schaffen eines Freiraums zwischen der Aufnahmeeinheit und der Lichtumlenkeinrichtung, oder durch einen geeigneten Lichtleiter erfolgen kann.

Der Tragarm kann ähnlich ausgestaltet sein wie ein herkömmlicher Haltearm für einen Fahrzeugaußenspiegel, das heißt einem Spiegelarm. Anstelle eines Fahrzeugaußenspiegels oder zusätzlich zu diesem kann die Lichtumlenkeinrichtung so in bzw. an dem Tragarm angeordnet sein, dass das zu erfassende äußere Fahrzeugumfeld mittels der Lichtumlenkeinrichtung optisch erfassbar ist.

Erfindungsgemäß umfasst der Tragarm ein erstes Teil, in dem die Aufnahmeeinheit angeordnet ist, und ein zweites Teil, in dem die Lichtumlenkeinrichtung angeordnet ist, wobei das erste Teil direkt oder indirekt miteinander verbunden sind. Das heißt, das erste Teil kann mit dem zweiten Teil zum Beispiel mittels einer Klebeverbindung, einer Schraubenverbindung oder einer Nietverbindung verbunden sein.

Vorteilhafterweise kann die Lichtumlenkeinrichtung fest in den Tragarm integriert sein oder, alternativ dazu, verstellbar in dem Tragarm angeordnet sein. Durch eine feste Integration der Lichtumlenkeinrichtung in dem Tragarm kann eine besonders robuste Anordnung der Lichtumlenkeinrichtung und eine besonders einfache Herstellung und baulich schlanke Ausbildung des Tragarms erreicht werden. Durch eine verstellbare Anordnung der Lichtumlenkeinrichtung an bzw. in dem Tragarm ist es möglich, eine besonders flexible Konstruktion zu erreichen. Darüber hinaus kann die Lichtumlenkeinrichtung so eingerichtet sein, dass diese durch eine manuelle oder automatische Betätigung in Abhängigkeit einer jeweiligen Fahrsituation des Fahrzeugs hinsichtlich ihrer räumlichen Ausrichtung verstellbar ist. Beispielsweise kann die Lichtumlenkeinrichtung durch das Einlegen des Rückwärtsgangs so verstellt werden, dass dem Fahrer ein gegenüber dem Normalbetrieb veränderter, an die vorliegende Fahrsituation angepasster Blickwinkel angezeigt werden kann.

Durch die Zweiteiligkeit des Tragarms muss insbesondere dafür Sorge getragen werden, dass alle der Witterung ausgesetzten Komponenten dicht gegenüber Nässe Feuchtigkeit ausgebildet sind.

Eine besonders vorteilhafte Weiterbildung der Erfindung sieht vor, dass das erste Teil und das zweite Teil des Tragarms mittels eines Schwenkmechanismus schwenkbar miteinander verbunden sind. Durch diese Ausgestaltung des Tragarms kann das erste Teil gegenüber dem zweiten Teil winkelverstellbar angeordnet werden.

Alternativ dazu oder zusätzlich, kann es vorteilhaft sein, dass das erste Teil und das zweite Teil des Tragarms mittels einer Sollbruchstelle miteinander verbunden sind. So kann bei einer Kollision des Tragarms eine Beschädigung der in dem ersten Teil aufgenommenen bzw. getragenen Aufnahmeeinheit durch ein gezieltes Wegbrechen des zweiten Teils vermieden werden.

In einer besonders vorteilhaften Weiterbildung der Erfindung ist das optisch erfasste äußere Fahrzeugumfeld, das mittels der Erfassungseinrichtung erfassbar ist, mittels der Wiedergabeeinrichtung, die innerhalb des Fahrzeuginnenraums angeordnet ist, kontinuierlich und in Echtzeit für einen Fahrer des Fahrzeugs darstellbar. Damit ist es möglich, einen bei Fahrzeugen herkömmlich eingesetzten Außen- oder Innenspiegel vollständig zu ersetzen, da das optisch erfasste äußere Fahrzeugumfeld unterbrechungsfrei und ohne signifikante zeitliche Verzögerung, das heißt in Echtzeit, darstellbar ist.

Um das erfindungsgemäße Sichtsystem für den Straßenverkehr homologieren zu können, kann es vorteilhaft sein, wenn durch die räumliche Anordnung und/oder durch die räumliche Ausrichtung der Lichtumlenkeinrichtung und/oder der Aufnahmeeinheit wenigstens ein für die Straßenzulassung eines Fahrzeugs gesetzlich vorgeschriebenes Sichtfeld vollständig oder teilweise optisch erfassbar und somit für den Fahrer im Fahrzeuginnenraum visualisierbar ist. Ein gesetzlich vorgeschriebenes Sichtfeld kann beispielsweise durch zwei oder mehrere Lichtumlenkeinrichtungen erfasst werden. Das heißt, eine einzelne Lichtumlenkeinrichtung erfasst in diesem Fall ein gesetzliches Sichtfeld nur teilweise. Innerhalb der Europäischen Union kann sich ein solches vorgeschriebenes Sichtfeld beispielsweise aus der EG-Richtlinie 1/127/EWG (bzw. 88/321/EWG) oder EG-Richtlinie 74/346/EWG (bzw. 98/40/EG) oder EG-Richtlinie 2003/97/EG (bzw. 2005/27/EG) oder 2007/38/EG oder insbesondere aus der Regelung Nr. 46 der Wirtschaftskommission der Vereinten Nationen (UN/ECE) - Einheitliche Bedingungen für die Genehmigung von Einrichtungen für indirekte Sicht und von Kraftfahrzeugen hinsichtlich der Anbringung solcher Einrichtungen - ergeben, die von den EU-Mitgliedsstaaten in nationale Gesetze umgewandelt werden müssen. Im Rahmen dieser Anmeldung beschreibt ein Sichtfeld den für einen Fahrer eines Fahrzeugs aus dem Fahrzeuginnenraum heraus sichtbaren Bereich. Dieser kann entweder direkt vom Fahrer eines Fahrzeugs ohne Hilfsmittel eingesehen werden (direkte Sicht) oder mittels eines Hilfsmittels indirekt vom Fahrer eingesehen werden (indirekte Sicht). Aus den oben genannten EG-Richtlinien ergeben sich sechs Sichtfeldklassen, die jeweils mit einer römischen Ziffer I bis VI gekennzeichnet sind. Dabei bildet die Sichtfeldklasse I das charakteristische Sichtfeld eines Innenspiegels, die Sichtfeldklassen II und III das charakteristische Sichtfeld eines Hauptaußenspiegels, die Sichtfeldklasse IV das charakteristische Sichtfeld eines Weitwinkelspiegels, die Sichtfeldklasse V das charakteristische Sichtfeld eines Rampenspiegels und die Sichtfeldklasse VI das charakteristische Sichtfeld eines Frontspiegels bzw. einer Frontkamera.

Es kann vorteilhaft sein, wenn das optisch erfassbare Sichtfeld dem Sichtfeld eines Hauptaußenspiegels und/oder eines Weitwinkelspiegels und/oder eines Rampenspiegels und/oder eines Frontspiegels eines Fahrzeugs entspricht. Auf diese Weise ist es möglich, wenigstens einen dieser für die Fahrzeugzulassung vorgeschriebenen Spiegel durch das erfindungsgemäße Sichtsystem zu ergänzen oder zu ersetzen.

In einer besonders vorteilhaften Ausführungsform der Erfindung kann die Aufnahmeeinheit in funktionaler und/oder in räumlicher Hinsicht zwischen der Lichtumlenkeinrichtung und der Wiedergabeeinrichtung angeordnet sein. Das heißt, dass beispielsweise die Lichtumlenkeinrichtung an einer weiter vom Fahrzeuginnenraum beabstandeten Position angeordnet sein kann, und die Aufnahmeeinheit näher am bzw. innerhalb des Fahrzeuginnenraums angeordnet sein können.

Eine vorteilhafte Weiterbildung des erfindungsgemäßen Sichtsystems sieht vor, dass die Lichtumlenkeinrichtung außerhalb des Fahrzeuginnenraums angeordnet ist. Dies ermöglicht es, ein besonders weites Sichtfeld mittels der Lichtumlenkeinrichtung beziehungsweise mittels der die Bildreflexion der Lichtumlenkeinrichtung aufnehmenden Aufnahmeeinheit optisch zu erfassen. Auf diese Weise lässt sich die räumliche Beabstandung zwischen der Lichtumlenkeinrichtung und der Aufnahmeeinheit besonders vorteilhaft nutzen. Die Aufnahmeeinheit ist vor Umwelteinflüssen oder Beschädigungen geschützt in dem Fahrzeuginnenraum, der ein klimatisierter Trockenbereich ist, angeordnet. Der Trockenbereich ist der Fahrzeuginnenraum, das heißt das Innere des Fahrerhauses. Dieser bietet bei vergleichsweise niedrigen und/oder hohen Außentemperaturen eine vergleichsweise konstante klimatische Umgebung für die Elektronik der Aufnahmeeinheit. Dadurch ist eine besonders vorteilhafte Einsparung eines abgedichteten Gehäuses für die Aufnahmeeinheit möglich. Auf diese Weise können signifikante Kosteneinsparungen hinsichtlich eines Tragarms oder der Aufnahmeeinheit selbst erzielt werden, da diese weniger aufwendig abgedichtet werden müssen. Durch diese Maßnahme wird auch die Diebstahlgefahr der Aufnahmeeinheit signifikant reduziert, da die relativ kostspielige Aufnahmeeinheit relativ sicher untergebracht ist.

Weiter kann es vorteilhaft sein, wenn das erste Teil des Tragarms wenigstens teilweise innerhalb des Fahrzeuginnenraums angeordnet ist. Durch diese Anordnung ist die in dem ersten Teil aufgenommene bzw. getragene Aufnahmeeinheit besonders gut vor äußeren Einflüssen wie beispielsweise Witterungseinflüssen, oder vor Kollisionen des Tragarms mit anderen Objekten geschützt.

Es hat sich für die Rundumsicht des Fahrers als besonders vorteilhaft erwiesen, wenn die Aufnahmeeinheit beziehungsweise der Tragarm in beziehungsweise an einem Dachbereich des Fahrzeugs angeordnet ist.

Allgemein ist eine Anordnung am Fahrzeug in einem Nicht-Tür-Bereich mit einem Hohlbereich, zum Beispiel Kotflügelbereich, vorteilhaft, dass sich dann aufgrund der fehlenden Scharniere und Gelenke, die Durchführung der elektrischen und gegebenenfalls optischen Leitungen durch die Fahrzeugwand vereinfachen.

Für eine besonders detailgetreue und/oder besonders realitätsnahe Wiedergabe des äußeren Fahrzeugumfelds kann es vorteilhaft sein, wenn die Lichtumlenkeinrichtung als Freiformfläche ausgebildet ist, deren Geometrie konvex, konkav oder plan ist. Alternativ oder ergänzend dazu kann es vorteilhaft sein, wenn die Lichtumlenkeinrichtung asphärisch ausgebildet ist. Hierdurch können aufwendige Bildkorrekturen aufgrund von Verzeichnung beziehungsweise Bildverzug des wiederzugebenden Bildes durch beispielsweise eine Berechnungseinheit eingespart werden.

Die Lichtumlenkeinrichtung kann auch - analog zu herkömmlichen Außenspiegeln - beheizt sein oder in einem beheizten Raumbereich untergebracht sein. Wie bei herkömmlichen Spiegeln kann auf diese Weise die Sicht und Funktion beeinträchtigendes Eis oder Kondenswasser entfernt werden.

Besonders vorteilhaft lässt sich das erfindungsgemäße Sichtsystem an einem damit ausgestatteten Fahrzeug nutzen. Ein solches Fahrzeug zeichnet sich durch eine besonders gute Rundumsicht aus.

Im Folgenden wird ein Ausführungsbeispiel eines erfindungsgemäßen Sichtsystems anhand einer Zeichnung näher erläutert. Es zeigen:
Fig. 1 ein schematisiert dargestelltes Fahrzeug mit einem erfindungsgemäßen Sichtsystem in der Art eines Hauptaußenspiegels und/oder eines Weitwinkelspiegels (Sichtfeldklasse II und III und/oder Sichtfeldklasse IV),
Fig. 2 eine schematisch dargestelltes Schichtsystem, das nicht Teil dieser Erfindung ist.
Fig. 3 ein schematisiert dargestelltes, Sichtsystem, das nicht Teil dieser Erfindung ist.
Fig. 4 ein schematisiert dargestelltes, erfindungsgemäßes Sichtsystem, dessen Lichtumlenkeinrichtung in einem Tragarm gemäß einer Ausführungsform angeordnet ist, und dessen Aufnahmeeinheit im Fahrzeuginnenraum, der ein klimatisierter Trockenbereich ist, angeordnet ist,
Fig. 5 ein schematisiert dargestelltes, erfindungsgemäßes Sichtsystem, dessen Lichtumlenkeinrichtung in einem Tragarm gemäß einer weiteren Ausführungsform angeordnet ist,
Fig. 6 ein schematisiert dargestelltes, erfindungsgemäßes Sichtsystem, dessen Lichtumlenkeinrichtung in einem Tragarm gemäß einer weiteren Ausführungsform angeordnet ist,
Fig. 7 ein schematisiert dargestelltes, erfindungsgemäßes Sichtsystem, dessen Lichtumlenkeinrichtung in einem Tragarm gemäß einer weiteren Ausführungsform angeordnet ist,
Fig. 8 ein schematisiert dargestelltes Fahrzeug in einer Draufsicht mit einem erfindungsgemäßen Sichtsystem in der Art eines Rampenspiegels (Sichtfeldklasse V), und
Fig. 9 ein schematisiert dargestelltes Fahrzeug in einer Seitenansicht mit einem erfindungsgemäßen Sichtsystem in der Art eines Frontspiegels (Sichtfeldklasse VI).

Gleiche oder ähnliche Komponenten sind in den Figuren durchgängig mit gleichen Bezugszeichen versehen.

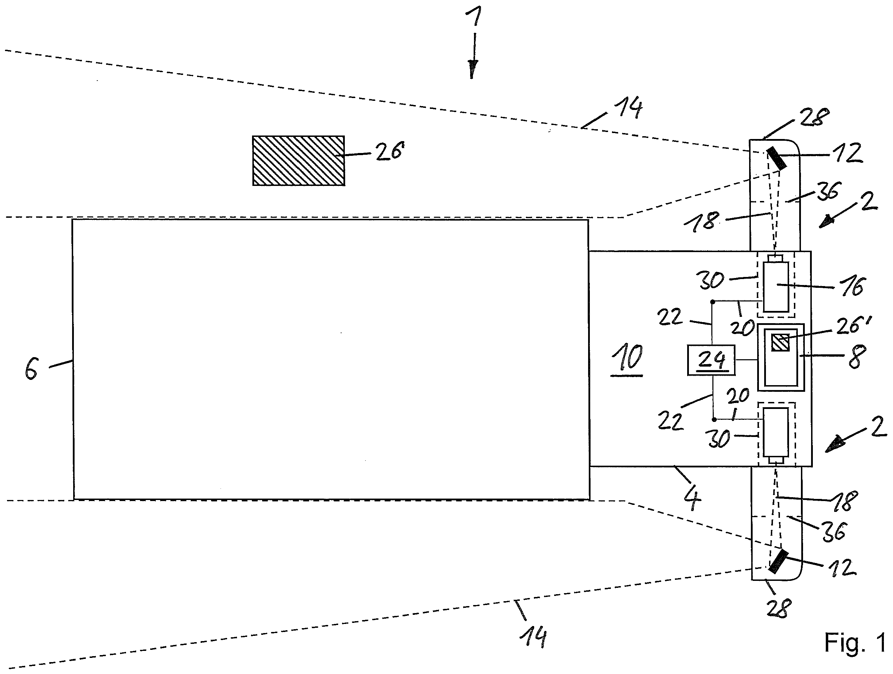

Figur 1 zeigt ein schematisiert dargestelltes Fahrzeug 1 mit einem erfindungsgemäßen Sichtsystem 2 in einer Draufsicht. In diesem Ausführungsbeispiel handelt es sich bei dem Fahrzeug 1 um ein Nutzfahrzeug in Form eines Lastkraftwagens. Das Fahrzeug 1 weist ein Fahrerhaus 4 und einen zum Transport von Waren vorgesehenen, in Fahrtrichtung hinter dem Fahrerhaus 4 angeordneten Aufbau 6 auf.

Das Sichtsystem 2, mit dem ein äußeres Fahrzeugumfeld für einen Fahrer (nicht dargestellt) des Fahrzeugs 1 visualisierbar ist, umfasst eine Wiedergabeeinheit 8, die in einem Fahrzeuginnenraum 10, das heißt im Inneren des Fahrerhauses 2, angeordnet ist. In diesem Ausführungsbeispiel handelt es sich bei der Wiedergabeeinheit 8 um einen Monitor, der so angeordnet ist, dass er in einer ergonomisch günstigen Weise von dem (nicht gezeigten) Fahrer des Fahrzeugs 1 abgelesen beziehungsweise eingesehen werden kann. Des Weiteren umfasst das Sichtsystem 2 eine Lichtumlenkeinrichtung 12, die in diesem Ausführungsbeispiel außerhalb des Fahrzeuginnenraums 10 angeordnet ist und räumlich so ausgerichtet ist, dass ein Sichtfeld 14 optisch erfasst werden kann. Bei der Lichtumlenkeinrichtung 12 handelt es sich in diesem Ausführungsbeispiel um eine spiegelnde Fläche in Form eines Spiegels. Darüber hinaus umfasst das Sichtsystem 2 eine Aufnahmeeinheit 16 in Form einer Kamera, die so ausgerichtet ist, dass mittels der Aufnahmeeinheit 16 das als Bild von der Lichtumlenkeinrichtung 12 reflektierte Sichtfeld 14 aufgenommen, das heißt gefilmt werden kann. Hierfür wird sichergestellt, dass zwischen der Lichtumlenkeinrichtung 12 und der Aufnahmeeinheit 16 ein optischer Pfad 18 besteht, der eine Aufnahme des Bildes der Lichtumlenkeinrichtung 12 durch die Aufnahmeeinheit 16 erlaubt. In diesem Ausführungsbeispiel ist der optische Pfad 18 durch eine bloße Aussparung des die Lichtumlenkeinrichtung 12 und die Aufnahmeeinheit 16 trennenden Raums gebildet.

Für eine Wiedergabe des durch die Lichtumlenkeinrichtung 12 erfassten und reflektierten Sichtfelds 14, das durch die Aufnahmeeinheit 16 aufgenommen wird, ist die Aufnahmeeinheit 16 mittels elektrischer Leitungen 20, 22 mit der Wiedergabeeinheit 8 funktional verbunden. In diesem Ausführungsbeispiel ist, wie gut in Figur 1 zu erkennen ist, eine optionale Berechnungseinheit 24 zwischen der Aufnahmeeinheit 16 und der Wiedergabeeinheit 8 angeordnet, die funktional auch in die Wiedergabeeinheit 8 integriert sein kann.

In diesem Ausführungsbeispiel erstreckt sich das von der Lichtumlenkeinrichtung 12 erfassbare Sichtfeld 14 von der Lichtumlenkeinrichtung 12 aus seitlich entlang des Fahrerhauses 2 und des Aufbaus 6 in Längsrichtung des Fahrzeugs 1, um das äußere Fahrzeug in Art eines Hauptaußenspiegels (Sichtfeldklasse II und III) zu visualisieren. Beispielsweise kann so ein sich im Sichtfeld 14 befindliches Objekt 26, bei dem es sich beispielsweise um ein anderes Kraftfahrzeug oder einen Fahrradfahrer handeln kann, optisch erfasst und dem Fahrer des Fahrzeugs 1 mittels der Wiedergabeeinheit 8 als ein Bild 26' im Fahrzeuginnenraum 10 visualisiert werden. Um einen Hauptaußenspiegel des Fahrzeugs 1 ergänzen oder sogar komplett ersetzen zu können, ist das Sichtsystem 2 und seine Einzelkomponenten dazu eingerichtet, das Sichtfeld 14 kontinuierlich und in Echtzeit, das heißt ohne eine signifikante oder wahrnehmbare Latenzzeit, auf der Wiedergabeeinheit 8 darzustellen.

In Figur 1 ist weiter gut zu erkennen, dass die Lichtumlenkeinrichtung 12 des Sichtsystems 2 in einen Tragarm 28 integriert ist, der sich in Fahrzeugquerrichtung von dem Fahrerhaus 4 seitlich weg erstreckt. Das heißt, dass die Lichtumlenkeinrichtung 12 außerhalb des Fahrzeuginnenraums 10 angeordnet ist. Dagegen ist die Aufnahmeeinheit 16 innerhalb des Fahrzeuginnenraums 10, das heißt räumlich beabstandet von der Lichtumlenkeinrichtung 12, angeordnet. Die Aufnahmeeinheit 16 ist in einem in Figur 1 gestrichelt dargestellten klimatisierten Trockenbereich 30 des Fahrzeugs 1 angeordnet beziehungsweise untergebracht, um auf diese Weise eine aufwendige Abdichtung des die Lichtumlenkeinrichtung 12 aufnehmenden Tragarms 28 einzusparen.

Wie weiter in Figur 1 dargestellt, weist das Fahrzeug 1 in diesem Ausführungsbeispiel auf seinen beiden Seiten, das heißt links und rechts von der Fahrzeuglängsachse, ein erfindungsgemäßes Sichtsystem 2 auf, um auf diese Weise beide herkömmlichen Hauptaußenspiegel des Fahrzeugs 1 entweder zu ergänzen oder diese komplett zu ersetzen.

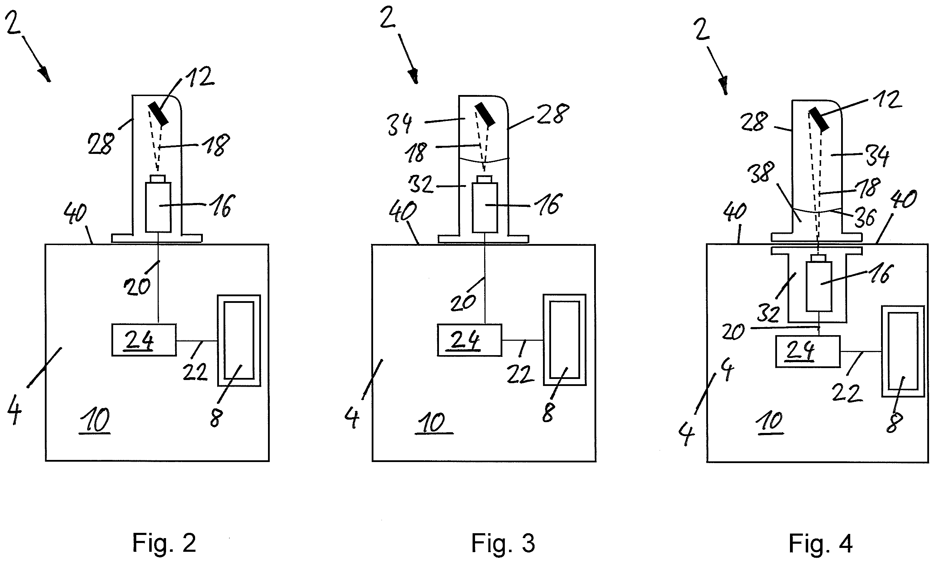

In Figur 2, die keine Ausführungsform dieser Erfindung darstellt, sind die Lichtumlenkeinrichtung 12 und die Aufnahmeeinheit 16 beide außerhalb des Fahrzeuginnenraums 10, jedoch voneinander beabstandet, angeordnet. Dabei ist die Lichtumlenkeinrichtung 12 weiter außen, das heißt an einer weiter vom Fahrzeuginnenraum 10 entfernten Position als die Aufnahmeeinheit 16 angeordnet. Zudem ist der Tragarm 28 bei dieser konstruktiv einfachen Lösung im Wesentlichen einteilig ausgebildet. Zum Schutz der relativ empfindlichen Kameraelektronik der Aufnahmeeinheit 16 ist das Innere des Tragarms 28 gegen das das Eindringen von Umwelteinflüssen, wie beispielsweise Schmutz oder Feuchtigkeit, mittels einer Abdichtung in einer ausreichend hohen, das heißt strengen Dichtheitsklasse geschützt.

In Figur 3, die keine Ausführungsform dieser Erfindung darstellt, sind die Lichtumlenkeinrichtung 12 und ist der Tragarm 28 zweiteilig ausgebildet und weist ein erstes Teil 32 in Form eines Kameragehäuses zur Aufnahme beziehungsweise zum Tragen der Aufnahmeeinheit 16 sowie ein zweites Teil 34 zur Aufnahme beziehungsweise zum Tragen der Lichtumlenkeinrichtung 12 auf. Zum Schutz der relativ empfindlichen Kameraelektronik der Aufnahmeeinheit 16 ist das erste Teil 32 des Tragarms 28 gegenüber dem Fahrzeugumfeld und/oder gegenüber dem zweiten Teil 34 gegen das Eindringen von Umwelteinflüssen, wie beispielsweise Schmutz oder Feuchtigkeit, mittels einer Abdichtung in einer ausreichend hohen Dichtheitsklasse geschützt.

Das erste Teil 32 und das zweite Teil 34 sind in diesem Ausführungsbeispiel mittels eines Schwenkmechanismus 36 schwenkbar miteinander verbunden. Dies kann sinnvoll sein, wenn eine bloße Verstellbarkeit der in den Tragarm 28 integrierten Lichtumlenkeinrichtung 12 oder ein Wegklappen des zweiten Teils 34 bei einer Kollision des Tragarms 28 mit einem Hindernis ermöglicht werden soll.

Figur 4 zeigt eine Ausführungsform des erfindungsgemäßen Sichtsystems 2 in einer schematisierten Darstellung. Bei dieser Ausführungsform ist ein Teil des Tragarms 28, nämlich der erste Teil 32 mitsamt dem zweiten Teil 34 innerhalb des klimatisierten Fahrzeuginnenraums 10 angeordnet. Auf diese Weise lässt sich die Aufnahmeeinheit 16 auf konstruktiv einfache Weise vor Beschädigungen durch Kollisionen oder sonstigen mechanischen Einflüssen schützen. Zudem wird durch diese Verlagerung der Aufnahmeeinheit 16 in den Fahrzeuginnenraum 10 die relativ empfindliche Kameraelektronik vor Temperatureinflüssen oder anderen Witterungseinflüssen im Außenbereich des Fahrzeugs 1 geschützt. Darüber hinaus wird auf diese Weise Gewicht beim Tragarm 28 eingespart, da die Aufnahmeeinheit nicht vollständig von dem Tragarm 28 getragen werden muss.

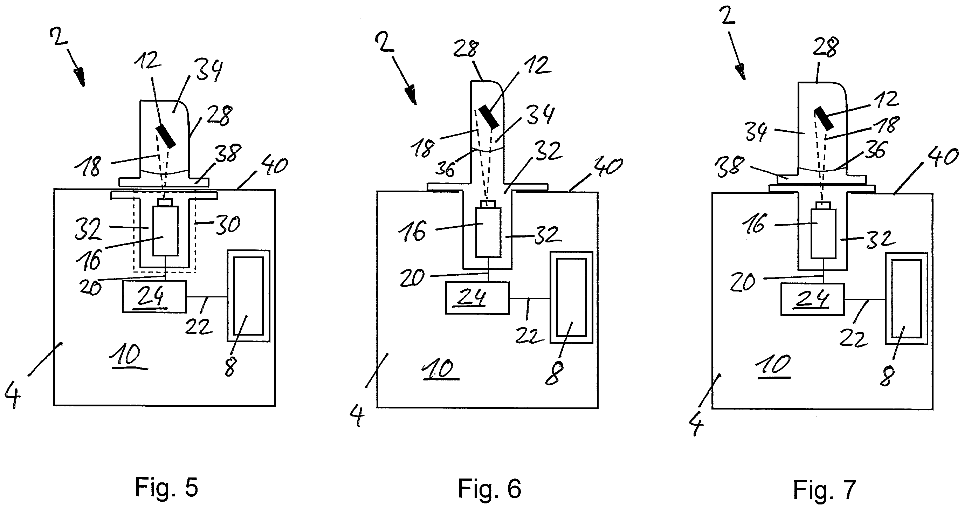

Eine weitere Ausführungsform des erfindungsgemäßen Sichtsystems 2 ist in Figur 5 in einer schematisierten Darstellung gezeigt. Bei dieser Ausführungsform ist die Aufnahmeeineinheit 16 gut vor Umwelteinflüssen geschützt in einem klimatisierten Trockenbereich 30 im Fahrzeuginnenraum des Fahrzeugs 1 angeordnet. Dieser Trockenbereich 30 zeichnet sich insbesondere dadurch aus, dass er gut vor dem Eindringen von Feuchtigkeit beziehungsweise von Nässe und/oder vor dem Eintrag von Umwelteinflüssen, wie Verschmutzungen, geschützt ist. Der Tragarm 28 weist das zweite Teil 34 zur Aufnahme der Lichtumlenkeinrichtung 12 auf und ist mittels eines Haltearms 38 an einer Fahrzeugaußenwand 40 des Fahrzeugs 1 befestigt. Der optische Pfad 18 erstreckt sich durch die Fahrzeugaußenwand 40 hindurch von der im Trockenbereich 30 angeordneten Aufnahmeeinheit 16 bis zu der außerhalb des Fahrzeuginnenraums 10 angeordneten Lichtumlenkeinrichtung 12. Diese Ausführungsform des Sichtsystems 2 ermöglicht es, den Tragarm 28 möglichst einfach, das heißt beispielsweise besonders leicht bauend oder besonders schlank oder lang bauend, oder ohne eine aufwendige Abdichtung in einer hohen Dichtheitsklasse, auszubilden.

In Figur 6, die eine alternative Ausführungsform des erfindungsgemäßen Sichtsystems 2 zeigt, ist die Lichtumlenkeinrichtung 12 in einer weiteren Ausführungsform des Tragarms 28 angeordnet ist. Des Weiteren ist die Aufnahmeeinheit 16 des Sichtsystems 2 in einem klimatisierten Trockenbereich im Fahrzeuginnenraum 10 des Fahrzeugs 1 angeordnet. Wie gut in Figur 6 zu erkennen ist, erstreckt sich das in Form eines Kameragehäuses ausgebildete erste Teil 32 über die Fahrzeugaußenwand 40 hinaus nach außen. Bei dieser Ausführungsform ist das in Form eines Kameragehäuses ausgebildete erste Teil 32 derart gut gegenüber seiner Umgebung abgedichtet, dass die Aufnahmeeinheit 16 gut vor Umwelteinflüssen geschützt ist.

Des Weiteren zeigt Figur 7 das schematisiert dargestellte, erfindungsgemäße Sichtsystem 2 in einer weiteren, alternativen Ausführungsform, bei der die Lichtumlenkeinrichtung 12 in dem Tragarm 28 gemäß einer weiteren Ausführungsform angeordnet ist. In Figur 7 ist gut zu erkennen, dass sich das in Form eines Kameragehäuses ausgebildete erste Teil 32 über die Fahrzeugaußenwand 40 hinaus nach außen erstreckt. In diesem Fall ist zwischen dem ersten Teil 32 und dem zweiten Teil 34 der Haltearm 38 angeordnet, um eine besonders robuste Ausführungsform des Sichtsystems 2 zu erreichen.

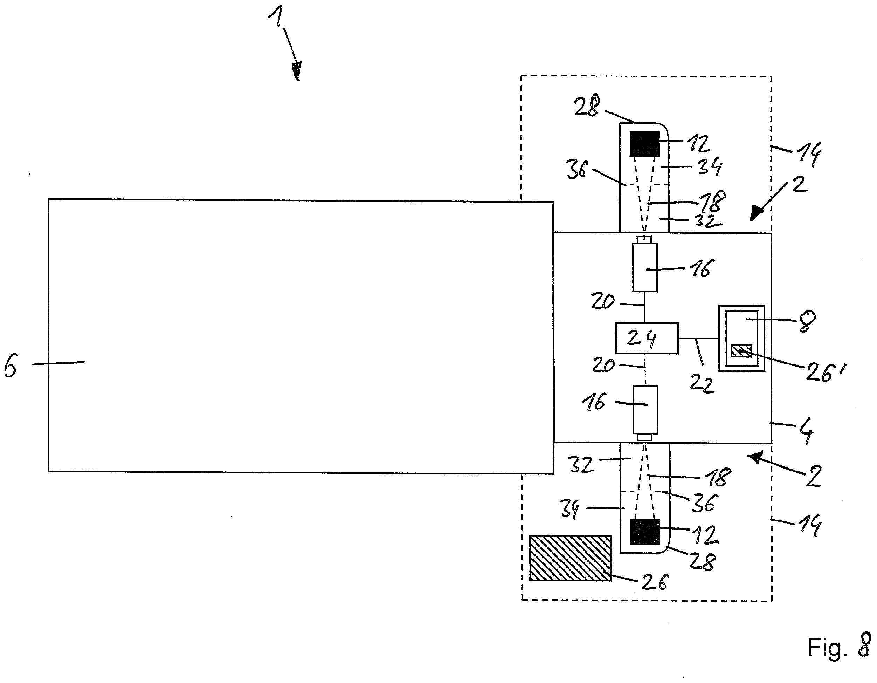

In Figur 8, die eine schematische Draufsicht auf das Fahrzeug 1 mit einem erfindungsgemäßen Sichtsystem 2 zeigt, ist eine weitere Anwendung des Sichtsystems 2 dargestellt. Bei dieser Anwendung wird das Sichtsystem 2 in der Art eines Rampenspiegels, das heißt für die in den eingangs genannten EG-Richtlinien 74/346/EWG oder 2003/97/EG oder UN/ECE Regelung Nr. 46 Sichtfeldklasse V. Der prinzipielle Aufbau des Sichtsystems 2 entspricht den obigen Ausführungen, das heißt es umfasst eine außerhalb des Fahrzeuginnenraums 10 angeordnete Lichtumlenkeinrichtung 12, eine von dieser beabstandet angeordnete Aufnahmeeinheit 16 und eine innerhalb des Fahrzeuginnenraums 10 angeordnete Wiedergabeeinheit 8. In diesem Anwendungsfall ermöglicht es das Sichtsystem 2, ein Objekt 26 zu visualisieren, das sich im Nahbereich des Fahrzeugs 1 seitlich neben sowie auf Höhe des Fahrerhauses 4 befindet. In Figur 8 befindet sich das Objekt 26 beispielhaft auf der rechten Fahrzeugseite und wird von der Wiedergabeeinheit 8 als Bild 26' wiedergegeben.

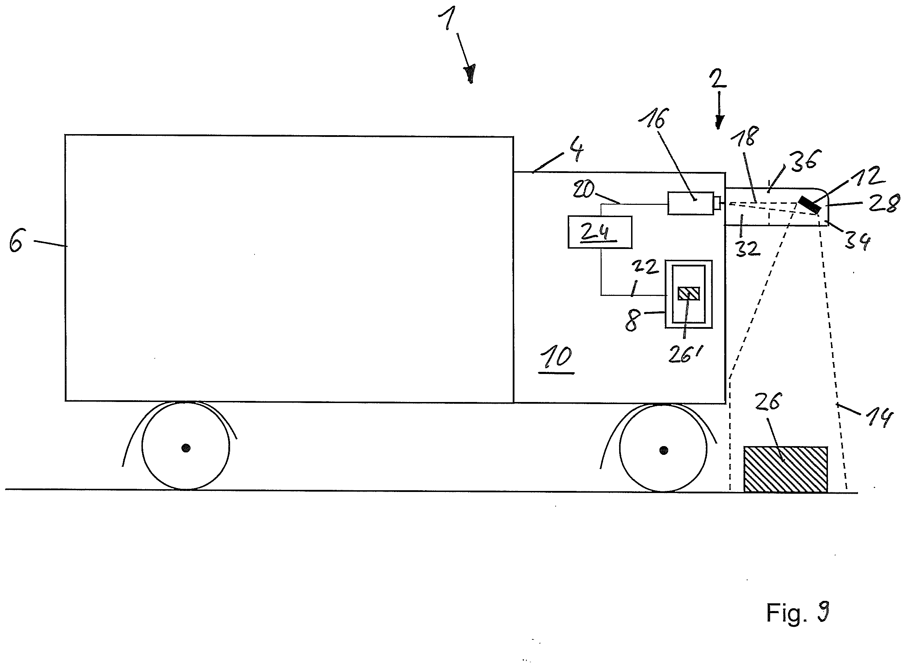

Weiter ist in Figur 9, die eine schematische Seitenansicht des Fahrzeugs 1 zeigt, ein weiterer Anwendungsfall des Sichtsystems 2 dargestellt, bei dem das Sichtsystem 2 in der Art eines Frontspiegels gemäß der in eingangs genannten EG-Richtlinien 74/346/EWG oder 2003/97/EG Sichtfeldklasse VI. Auch in diesem Anwendungsfall weist das Sichtsystem 2 eine außerhalb des Fahrzeuginnenraums 10 angeordnete Lichtumlenkeinrichtung 12, eine davon beabstandete und im Fahrzeuginnnenraum 10 angeordnete Aufnahmeeinheit 16 sowie eine im Fahrzeuginnenraum 10 angeordnete Wiedergabeeinheit 8 auf. Im Anwendungsfall gemäß Figur 7 dient das Sichtsystem 2 allerdings der Visualisierung von Objekten 26, die sich im Nahbereich direkt vor dem Fahrzeug 1 befinden. Beispielhaft ist ein sich vor dem Fahrzeug 1 befindliches Objekt 26 gezeigt, das als Bild 26' in der Wiedergabeeinheit 8 wiedergegeben beziehungsweise durch diese im Fahrzeuginnenraum 10 visualisiert wird.

Ausgehend von den dargestellten Ausführungsformen kann das erfindungsgemäße Sichtsystem 2 in vielerlei Hinsicht abgewandelt werden. Beispielsweise ist es denkbar, dass das Fahrzeug 1 mehrere Sichtsysteme 2 aufweist, um mehrere oder auch sämtliche Sichtfeldklassen I bis VI für den Fahrer innerhalb des Fahrzeuginnenraums 10 zu visualisieren. Dabei kann die Wiedergabeeinheit 8 entweder alle Sichtfeldklassen I bis VI gleichzeitig dauerhaft und in Echtzeit anzeigen, oder es können mehrere einzelne Wiedergabeeinheiten 8 vorhanden sein, von den jeweils eine genau eine oder mehrere der Sichtfeldklassen I bis VI anzeigt.

Zudem kann die Lichtumlenkeinrichtung 12 auch mehrere Lichtumlenkelemente aufweisen, die mittels der einen Aufnahmeeinheit 16 erfassbar sind.

Weiter ist es möglich, den Tragarm 28 mit einer Sollbruchstelle auszustatten, so dass bei einer Kollision des Tragarms 28 ein Teil des Tragarms 28 planmäßig abbricht, um eine Beschädigung des Fahrerhauses 4 zu vermeiden. Diese Sollbruchstelle kann entweder alternativ zum Schwenkmechanismus 36 in Figur 3 oder zusätzlich zu diesem vorgesehen sein. Zudem ist es möglich, den Schwenkmechanismus 36 durch eine einfache und kostengünstige Klebe-, Schrauben- oder Nietverbindung zu ersetzen, um so eine besonders kostengünstige Ausführungsform des Tragarms 28 bereitzustellen.

Des Weiteren ist es möglich, weitere Fahrzeugfunktionen in den Tragarm 28 zu integrieren, wie beispielsweise einen Abstandssensor, eine Antenne zum Empfang von Satelliten- oder Funksignalen oder einen Fahrtrichtungsanzeiger oder einen Toten-Winkel-Sensor.

Wie weiter oben bereits erwähnt, kann die in den Figuren 1 bis 7 als separates Bauteil dargestellte Berechnungseinheit 24 auch in die Wiedergabeeinheit 8 oder aber in die Aufnahmeeinheit 16 integriert sein. Anstatt eine Verzeichnung beziehungsweise einen Bildverzug des Bildes 26' durch die Berechnungseinheit 24 zu korrigieren, kann diese Korrektur auch durch die Form der Lichtumlenkeinrichtung 12 erfolgen.

Der optische Pfad 18 kann entweder in Form einer Aussparung, das heißt durch ein freies Blickfeld zwischen der Lichtumlenkeinrichtung 12 und der Aufnahmeeinheit 16, oder alternativ dazu durch einen geeigneten optischen Leiter beziehungsweise Lichtleiter (nicht dargestellt) ausgebildet sein.

### Bezugszeichenliste:

- 1: Fahrzeug
- 2: Sichtsystem
- 4: Fahrerhaus
- 6: Aufbau
- 8: Wiedergabeeinheit
- 10: Fahrzeuginnenraum
- 12: Lichtumlenkeinrichtung
- 14: Sichtfeld
- 16: Aufnahmeeinheit
- 18: optischer Pfad
- 20, 22: elektrische Leitung
- 24: Berechnungseinheit
- 26: Objekt
- 26': Bild des Objekts 26
- 28: Tragarm in Form eines Spiegelarms
- 30: Trockenbereich des Fahrzeugs 1
- 32: **erstes Teil** in Form eines Kameragehäuses
- 34: **zweites Teil** in Form einer Spiegelaufnahme
- 36: Schwenkmechanismus und/oder Sollbruchstelle
- 38: Haltearm
- 40: Fahrzeugaußenwand

## Patentansprüche

1. Fahrzeug (1) mit einem Sichtsystem zum Visualisieren eines äußeren Fahrzeugumfelds des Fahrzeugs (1), insbesondere eines Lastkraftwagens, innerhalb eines Fahrzeuginnenraums (10), mit wenigstens einer das äußere Fahrzeugumfeld optisch erfassenden Erfassungseinrichtung (12, 16, 18) und mit wenigstens einer innerhalb des Fahrzeuginnenraums (10) angeordneten und das erfasste Fahrzeugumfeld wiedergebenden Wiedergabeeinrichtung (8), wobei:
- die Erfassungseinrichtung (12, 16, 18) eine Lichtumlenkeinrichtung (12) zum wenigstens teilweisen optischen Erfassen des äußeren Fahrzeugumfelds und eine von der Lichtumlenkeinrichtung (12) beabstandet angeordnete Aufnahmeeinheit (16) aufweist,
- mittels der Aufnahmeeinheit (16) ein Bild der Lichtumlenkeinrichtung (12) aufnehmbar und mittels der Wiedergabeeinrichtung (8) wiedergebbar ist,
- die Aufnahmeeinheit (16) in einem ersten Teil (32) eines Tragarms (28), der sich von dem Fahrzeug (1) nach außen erstreckt, angeordnet ist,
- die Lichtumlenkeinrichtung (12) in einem zweiten Teil (34) des Tragarms (28) angeordnet ist, und
- das das erste Teil (32) und das zweite Teil (34) direkt oder indirekt miteinander verbunden sind.,
**dadurch gekennzeichnet, dass**
- die Aufnahmeeinheit (16) in dem Fahrzeuginnenraum (10) angeordnet ist und der Fahrzeuginnenraum (10) ein klimatisierter Trockenbereich ist.

2. Fahrzeug (1) mit einem Sichtsystem nach Anspruch 1, **dadurch gekennzeichnet, dass** das optisch erfasste äußere Fahrzeugumfeld mittels der Wiedergabeeinrichtung (8) kontinuierlich und in Echtzeit darstellbar ist.

3. Fahrzeug (1) mit einem Sichtsystem nach Anspruch 1 oder 2, **dadurch gekennzeichnet, dass** durch die räumliche Anordnung und/oder durch die räumliche Ausrichtung der Lichtumlenkeinrichtung (12) und/oder der Aufnahmeeinheit (16) wenigstens ein für die Straßenzulassung des Fahrzeugs (1) gesetzlich vorgeschriebenes Sichtfeld (14) wenigstens teilweise optisch erfassbar ist.

4. Fahrzeug (1) mit einem Sichtsystem nach Anspruch 3, **dadurch gekennzeichnet, dass** das optisch erfassbare Sichtfeld (14) dem Sichtfeld eines Hauptaußenspiegels und/oder eines Weitwinkelspiegels und/oder eines Rampenspiegels und/oder eines Frontspiegels des Fahrzeugs entspricht.

5. Fahrzeug (1) mit einem Sichtsystem nach einem der vorangehenden Ansprüche, **dadurch gekennzeichnet, dass** die Lichtumlenkeinrichtung (12) außerhalb des Fahrzeuginnenraums (10) angeordnet ist,

6. Fahrzeug (1) mit einem Sichtsystem nach einem der vorangehenden Ansprüche, **dadurch gekennzeichnet, dass** das erste Teil (32) des Tragarms (28) wenigstens teilweise innerhalb des Fahrzeugsinnenraums (10) angeordnet ist.

7. Fahrzeug (1) mit einem Sichtsystem nach einem der vorangehenden Ansprüche, **dadurch gekennzeichnet, dass** der Tragarm (28) in einem Dachbereich des Fahrzeugs angeordnet ist.

8. Fahrzeug (1) mit einem Sichtsystem nach einem der vorangehenden Ansprüche, **dadurch gekennzeichnet, dass** die Lichtumlenkeinrichtung (12) eine Freiformfläche aufweist.

## Claims

1. A vehicle (1) with a viewing system for visualizing a surrounding field outside of the vehicle (1), in particular of a truck, inside a vehicle cabin (10), with at least one detection device (12, 16, 18) that optically detects the surrounding field outside of the vehicle (1) and with at least one reproduction device (8) arranged inside the vehicle cabin (10) and reproducing the detected surrounding field of the vehicle, whereby:
- the detection device (12, 16, 18) comprises a light deflection device (12) for at least partially optically detecting the surrounding field outside the vehicle and comprises a recording unit (16) arranged at a distance from the light deflection device (12),
- an image from the light deflection device (12) can be recorded by the recording unit (16) and reproduced by the reproduction device (8),
- the recording unit (16) is arranged in a first part (32) of a carrier arm (28) extending out from the vehicle (1),
- the light deflection device (12) is arranged in a second part (34) of the carrier arm (28), and
- the first part (32) and the second part (34) are directly or indirectly connected to one another,
**characterized in that**
the recording unit (16) is located in the vehicle cabin (10) and the vehicle cabin (10) is a climatized dry area.

2. The vehicle (1) with a viewing system according to claim 1, **characterized in that** the optically detected surrounding field outside the vehicle can be shown continuously and in real time by the reproduction device (8).

3. The vehicle (1) with a viewing system according to claim 1 or 2, **characterized in that** at least one view field (14) legally prescribed for the authorization of the vehicle (1) for street traffic can be at least partially optically detected by the spatial arrangement and/or by the spatial alignment of the light deflection device (12) and/or of the recording unit (16).

4. The vehicle (1) with a viewing system according to claim 3, **characterized in that** the optically detectable viewing field (14) corresponds to the viewing field of a main outside mirror and/or of a wide-angle mirror and/or of a ramp mirror and/or of a front mirror of the vehicle.

5. The vehicle (1) with a viewing system according to one of the previous claims, **characterized in that** the light deflection device (12) is located outside of the vehicle cabin (10).

6. The vehicle (1) with a viewing system according to one of the previous claims, **characterized in that** the first part (32) of the carrier arm (28) is located at least partially inside the vehicle cabin (1).

7. The vehicle (1) with a viewing system according to one of the previous claims, **characterized in that** the carrier arm (28) is arranged in a roof area of the vehicle.

8. The vehicle (1) with a viewing system according to one of the previous claims, **characterized in that** the light deflection device (12) has a freeform surface.

## Revendications

1. Véhicule (1) comprenant un système de visualisation destiné à visualiser un environnement extérieur du véhicule (1), en particulier d'un poids-lourd, à l'intérieur d'un habitacle de véhicule (10), comprenant au moins un dispositif de détection (12, 16, 18) détectant optiquement l'environnement extérieur du véhicule et comprenant au moins un dispositif de reproduction (8) agencé à l'intérieur de l'habitacle de véhicule (10) et reproduisant l'environnement détecté du véhicule, dans lequel :
- le dispositif de détection (12, 16, 18) comprend un déflecteur de lumière (12) destiné à détecter optiquement au moins en partie l'environnement extérieur du véhicule et une unité d'acquisition (16) agencée à distance du déflecteur de lumière (12),
- une image du déflecteur de lumière (12) peut être acquise au moyen de l'unité d'acquisition (16) et peut être reproduite au moyen du dispositif de reproduction (8),
- l'unité d'acquisition (16) est agencée dans une première partie (32) d'un bras de support (28), qui s'étend vers l'extérieur depuis le véhicule (1),
- le déflecteur de lumière (12) est agencé dans une deuxième partie (34) du bras de support (28), et
- la première partie (32) et la deuxième partie (34) sont reliées l'une à l'autre de manière directe ou indirecte, **caractérisé en ce que**
- l'unité d'acquisition (16) est agencée dans l'habitacle de véhicule (10) et l'habitacle de véhicule (10) est une zone sèche climatisée.

2. Véhicule (1) comprenant un système de visualisation selon la revendication 1, **caractérisé en ce que** l'environnement extérieur du véhicule détecté optiquement peut être représenté en continu et en temps réel au moyen du dispositif de reproduction (8).

3. Véhicule (1) comprenant un système de visualisation selon la revendication 1 ou 2, **caractérisé en ce qu'**au moins un champ de vision (14) prescrit par la loi pour l'homologation routière du véhicule (1) peut être détecté optiquement au moins en partie par la disposition dans l'espace et/ou par l'orientation dans l'espace du déflecteur de lumière (12) et/ou par l'unité d'acquisition (16).

4. Véhicule (1) comprenant un système de visualisation selon la revendication 3, **caractérisé en ce que** le champ de vision (14) pouvant être détecté optiquement correspond au champ de vision d'un rétroviseur extérieur principal et/ou d'un rétroviseur grand angle et/ou d'un rétroviseur d'approche et/ou d'un rétroviseur avant du véhicule.

5. Véhicule (1) comprenant un système de visualisation selon l'une quelconque des revendications précédentes, **caractérisé en ce que** le déflecteur de lumière (12) est agencé à l'extérieur de l'habitacle de véhicule (10).

6. Véhicule (1) comprenant un système de visualisation selon l'une quelconque des revendications précédentes, **caractérisé en ce que** la première partie (32) du bras de support (28) est agencée au moins en partie à l'intérieur de l'habitacle de véhicule (10).

7. Véhicule (1) comprenant un système de visualisation selon l'une quelconque des revendications précédentes, **caractérisé en ce que** le bras de support (28) est agencé dans une zone de toit du véhicule.

8. Véhicule (1) comprenant un système de visualisation selon l'une quelconque des revendications précédentes, **caractérisé en ce que** le déflecteur de lumière (12) présente une surface de forme libre.
